# EUROPÄISCHE PATENTANMELDUNG

(11) **EP 3 617 105 A1**
(43) Veröffentlichungstag der Anmeldung: **04.03.2020**
(21) Anmeldenummer: 19188532.6
(22) Anmeldetag: 26.07.2019
(51) Int. Cl.: B65G 65/00, B65G 65/23, B07C 1/02, B65B 69/00, B65D 88/56

(54) **VERFAHREN ZUM ENTLADEN VON PACKSTÜCKEN AUS EINEM GEKIPPTEN BEHÄLTER AUF EIN FÖRDERBAND**

(30) Priorität: 29.08.2018 DE 102018121083
(71) Anmelder: Deutsche Post AG, 53113 Bonn (DE)
(72) Erfinder: Hartmann, Bernd, 53501 Grafschaft-Leimersdorf (DE); Loh, Hillar, 53859 Niederkassel (DE)
(74) Vertreter: Cohausz & Florack

(57) **Zusammenfassung**

Beschrieben und dargestellt ist ein Verfahren zum Entladen von Packstücken (5) aus einem Behälter (1), insbesondere Rollbehälter, das verhältnismäßig wenig Platz bedarf, mit einer Behälterführung (18,24,30) und einem Förderband (12,23,29), bei dem die Behälter (1) von der Behälterführung (18,24,30) nacheinander entlang einer Behälterbahn (14,27,32) bewegt werden, bei dem sich das Förderband (12,23,29) wenigstens abschnittsweise seitlich und wenigstens im Wesentlichen parallel zur Behälterbahn (14,27,32) erstreckt, bei dem die Behälter (1) während der über die Behälterbahn (14,27,32) vorgegebenen Bewegung entlang der Behälterführung (18,24,30) sowie entlang des Förderbands (12,23,29) seitlich in Richtung des Förderbands (12,23,29) gekippt werden, bei dem die Packstücke (5) aus dem gekippten Behälter (1) auf das Förderband (12,23,29) rutschen, bei dem das Förderband (12,23,29) die aus dem Behälter (1) gerutschten Packstücke (5) weitertransportiert und bei dem die ausgeleerten, gekippten Behälter (1) während der über die Behälterbahn (14,27,32) vorgegebenen Bewegung entlang der Behälterführung (18,24,30) wieder aufgerichtet werden.

## Beschreibung

Die Erfindung betrifft ein Verfahren zum Entladen von Packstücken aus einem Behälter, insbesondere Rollbehälter, mit einer Behälterführung und einem Förderband.

Es sind bereits verschiedene Einrichtungen zum Entladen von Packstücken, also umverpackten Gütern und/oder Stückgütern, aus Behältern bekannt. Beispielsweise werden Packstücke in Verteilzentren in Behältern, insbesondere in auf Rollen verfahrbaren Rollbehältern, angeliefert, die zunächst entladen werde müssen, um die Packstücke zu sortieren und/oder weiterverteilen zu können. Die Entladung der Behälter geschieht dabei entweder durch händisches Leeren der Behälter auf einen Förderer oder dergleichen oder durch das Auskippen der Behälter auf ein Förderband oder dergleichen.

Dazu werden die Behälter zu der für die Entladung vorgesehenen Stelle bewegt und dort abgestellt. Anschließend kann der Behälter dann händisch oder durch Auskippen auf ein Förderband entladen werden. Währenddessen können weitere, zu entleerende Behälter an der für die Entladung vorgesehenen Stelle aufgereiht werden. Um einen höheren Durchsatz bei der Entleerung von Behältern erreichen zu können, können mehrere Stellen für die Entleerung einzelner Behälter nebeneinander vorgesehen sein. Dann können zudem die noch zu entleerenden Behälter in mehreren Reihen nebeneinander aufgereiht werden.

Für die entsprechende Handhabung der Behälter wird eine gewisse Fläche benötigt, und zwar für die Bewegung der Behälter zur Entladestelle, für die Entladestelle und mit den entsprechenden Entladeeinrichtungen selbst und für die Bewegung der entladenen Behälter weg von der Entladestelle. Dabei wird der Platzbedarf insbesondere dann nicht unerheblich, wenn sehr viele Behälter in kurzer Zeit entladen werden sollen. Einerseits sind dann regelmäßig mehrere Entladestellen und hinreichend Raum zur Aufreihung der Behälter vor den Entladestellen nötig, wobei gleichzeitig ausreichend Platz vorhanden sein muss, um trotz der auf die Entleerung wartenden Behälter, die bereits entladenen Behälter abtransportieren zu können, so dass diese möglichst rasch wieder für die Aufnahme von anderen Packstücken zur Verfügung stehen.

Daher liegt der vorliegenden Erfindung die Aufgabe zugrunde, das eingangs genannte und zuvor näher beschriebene Verfahren derart auszugestalten und weiterzubilden, dass der Platzbedarf für die entsprechende Handhabung der Behälter verringert werden kann, ohne eine nennenswerte Verringerung des Durchsatzes an zu entleerenden Behältern in Kauf nehmen zu müssen.

Diese Aufgabe ist gemäß Anspruch 1 gelöst durch ein Verfahren zum Entladen von Packstücken aus einem Behälter, insbesondere Rollbehälter, mit einer Behälterführung und einem Förderband,
- bei dem die Behälter von der Behälterführung nacheinander entlang einer Behälterbahn bewegt werden,
- bei dem sich das Förderband wenigstens abschnittsweise seitlich und wenigstens im Wesentlichen parallel zur Behälterbahn erstreckt,
- bei dem die Behälter während der über die Behälterbahn vorgegebenen Bewegung entlang der Behälterführung sowie entlang des Förderbands seitlich in Richtung des Förderbands gekippt werden,
- bei dem die Packstücke aus den gekippten Behälter auf das Förderband rutschen,
- bei dem das Förderband die aus den Behältern gerutschten Packstücke weitertransportiert und
- bei dem die ausgeleerten, gekippten Behälter während der über die Behälterbahn vorgegebenen Bewegung entlang der Behälterführung wieder aufgerichtet werden.

Die Erfindung hat mithin erkannt, dass der Transport der Behälter und die Entladung der Behälter zusammengefasst werden können, um beides zeitlich und örtlich überlagernd durchführen zu können. Die Heranführung und die Abführung von Behältern zur bzw. von der Entladestation kann somit erheblich vereinfacht und beschleunigt werden, was zu einem geringeren Flächenbedarf für die Handhabung der Behälter, insbesondere für Pufferflächen für die Behälter, führt. Die Behälter können vereinfacht gesprochen auf ihrem Weg zur erneuten Verwendung entleert werden, ohne dass dazu eine zeitlich und räumlich separate Handhabung der Behälter erforderlich wäre. Dabei können auch weitere Entladestationen eingespart werden, weil die Verweilzeiten der Behälter in der Entladestation sehr gering ausfallen, da die Behälter mit einer verhältnismäßig hohen Geschwindigkeit durch die Entladestation bewegt werden können.

Dabei ist es besonders zweckmäßig, dass die Behälter von der Behälterführung nacheinander entlang einer Behälterbahn durch die Entladestation bewegt werden können, und zwar insbesondere ohne zwischendurch angehalten werden zu müssen. Da die Behälter hintereinander in der Transportrichtung entlang der Behälterbahn geführt werden, können die einzelnen Behälter zudem in kurzen Abständen aufeinanderfolgen, was zu einer weiteren Verringerung des Platzbedarfs führt. Während die Behälter entlang der Behälterbahn bewegt werden, die wenigstens im Wesentlichen geradlinig ausgebildet sein kann, aber nicht muss, werden die Behälter wenigstens abschnittsweise wenigstens im Wesentlichen parallel zu einem Förderband bewegt, das in diesem Bereich seitlich zur Behälterbahn angeordnet ist. Dabei bietet es sich für die Entleerung der Behälter an, wenn das Förderband angrenzend bzw. mit einem geringen Abstand zur Behälterbahn angeordnet ist. In diesem Bereich, in dem die Behälterbahnen und das Förderband nebeneinander angeordnet sind, wird der Behälter seitlich in Richtung des Förderbands gekippt bzw. geneigt, und zwar während der Behälter weiter entlang der Behälterbahn geführt wird. Das Kippen bzw. das Neigen der Behälter kann mit anderen Worten als eine die Bewegung der Behälter entlang der Behälterbahn überlagernde Bewegungskomponente angesehen werden. Durch Kippen bzw. Neigen der Behälter wird die Entladung der Behälter ermöglicht bzw. eingeleitet. Aus den gekippten bzw. geneigten Behältern können dann die darin enthaltenen Packstücke herausrutschen und zwar auf das benachbart vorgesehene Förderband, das die Packstücke weitertransportiert, und zwar insbesondere zu einer Sortiereinrichtung zum Sortieren der Packstücke nach vorgegebenen Kriterien, beispielsweise nach der Zustelladresse. Nachdem die Behälter auf die beschriebene Weise entleert worden sind, werden die gekippten bzw. geneigten Behälter wieder aufgerichtet, und zwar vorzugsweise zurück in eine Ausgangsstellung vor dem Kipp- bzw. Neigevorgang und/oder vor der Entladestation. Die Behälter stehen so für eine erneute Verwendung zur Verfügung.

Die Behälter sind bedarfsweise zur Entladung über eine Seite der Behälter vorgesehen, so dass die Behälter aus einer aufrechten oder vertikalen Ausrichtung allenfalls um 90° in eine flache oder horizontale Ausrichtung gekippt bzw. geneigt werden müssen. Dies ist insbesondere dann der Fall, wenn die Behälter über eine Seite der Behälter entleert werden. Dazu kann dort auf eine Seitenwand wenigstens teilweise verzichtet und/oder die Seitenwand wenigstens teilweise geöffnet werden, bevor der Behälter entleert wird. Grundsätzlich ist es aber auch möglich, dass die Behälter alternativ oder zusätzlich kopfseitig entleert werden. Dazu kann auf die Oberseite der Behälter wenigstens teilweise verzichtet und/oder die Kopfseite wenigstens teilweise geöffnet werden. Dann ist es beispielsweise denkbar, dass die Behälter um mehr als 90°, beispielsweise um einen Winkel zwischen 90° und 180° gekippt werden. Die Behälter werden also anders ausgedrückt wenigstens teilweise auf den Kopf gestellt.

Das Förderband kann als Förderband eines Bandförderers oder Gurtförderers verstanden werden, bei dem als Zugmittel zur Förderung der Packstücke wenigstens ein Band oder Gurt vorgesehen ist. Es kommen aber auch andere Zugmittel in Frage, wie diese bei sogenannten Kettenförderern zum Einsatz kommen. Da jedoch die Verwendung von Bändern oder Gurten bevorzugt ist, wird vorliegend weiter der Begriff Förderband verwendet. Es können auch Riemenförderer mit mehreren nebeneinander angeordneten, endlos umlaufenden Riemen oder Gurten vorgesehen sein. Alternativ können auch mehrere Riemenförderer mit wenigstens einem Riemen oder Gurt nebeneinander vorgesehen sein, um eine Mehrzahl von Riemen und/oder Gurten zu bilden. Des Weiteren kann das Förderband als ein durchgängiges Förderband oder aber als mehrere hintereinander angeordnete Förderbänder verstanden werden. Dies gilt insbesondere dann, wenn die Förderbänder auf unterschiedlichen Höhenniveaus und/oder mit unterschiedlichen Steigungen angeordnet sind. Das Förderband wird also eher funktional verstanden und kann bedarfsweise sehr allgemein verstanden werden.

Bei den Packstücken kann es sich um umverpackte Güter und/oder umverpackte Stückgüter handeln. Hinsichtlich der Größe, der Form und der Art bestehen grundsätzlich keine Einschränkungen. Allerdings wird es meist bevorzugt sein, wenn die Packstücke von einer Person getragen und gehandhabt werden können. Insbesondere ist es erfindungsgemäß von besonderem Vorteil, wenn die Packstücke sogenannte Paketsendungen bzw. Pakete sind, die separat verwendet und in Verteilzentren sortiert und verteilt werden.

Bei einer ersten besonders bevorzugten Ausgestaltung des Verfahrens werden die Behälter während des Kippens der Behälter, während des Entladens der Packstücke aus den Behältern und/oder während des Aufrichtens der Behälter kontinuierlich, also ohne Unterbrechung, entlang der Behälterbahn bewegt. Dies erhöht den Durchsatz und verringert so den Platzbedarf. Dabei können die Behälter in einer konstruktiv besonders einfachen Weise mit einer wenigstens im Wesentlichen konstanter Geschwindigkeit bewegt werden. Aus den genannten Gründen ist es zudem bedarfsweise zweckmäßig, wenn die Behälter während der gesamten Bewegung der Behälter durch die Behälterführung entlang der gesamten Behälterbahn kontinuierlich oder gar mit wenigstens im Wesentlichen konstanten Geschwindigkeit bewegt werden.

Zudem kann die Entleerung der Behälter besonders einfach und zuverlässig erfolgen, wenn die Behälter während des Kippens und/oder während des Aufrichtens um eine Achse geschwenkt werden, die wenigstens im Wesentlichen parallel zur Behälterbahn ausgerichtet ist. So lässt sich die Bewegung der Behälter entlang der Behälterbahn und das Kippen bzw. Schwenken der Behälter einfach und zuverlässig entkoppelt voneinander durchführen. Dabei ist es für ein einfaches aber schonendes Entleeren der Behälter alternativ oder zusätzlich zweckmäßig, wenn die Behälter während des Kippens und/oder während des Aufrichtens mit einer wenigstens im Wesentlichen gleichförmigen, insbesondere wenigstens im Wesentlichen konstanten, Winkelgeschwindigkeit zur Seite geschwenkt werden, um auf dieser Weise die Packstücke aus den Behältern rutschen zu lassen.

Zur Vereinfachung des Verfahrens und für eine schonende Handhabung der Packstücke können die Behälter während des Kippens der Behälter, während des Entladens der Packstücke und/oder während des Aufrichtens der Behälter entlang einer Behälterbahn wenigstens im Wesentlich in dieselbe Richtung und/oder mit wenigstens im Wesentlichen derselben Geschwindigkeit bewegt werden wie der seitlich zu den Behältern angeordnete Bereich des Förderbands. So können auf die Packstücke beim Entladen einwirkende Belastungsspitzen unter Umständen herabgesetzt und Beschädigungen der Packstücke möglichst vermieden. Zudem können so unter Umständen räumlich eng begrenzte Haufen aus Packstücken gebildet werden, die jeweils aus einem Behälter entleert worden sind. Die Behälter können aber auch während des Kippens der Behälter, während des Entladens der Packstücke und/oder während des Aufrichtens der Behälter entlang einer Behälterbahn in die entgegengesetzte Richtung und/oder mit abweichender Geschwindigkeit bewegt werden als der seitlich zu den Behältern angeordnete Bereich des Förderbands. Dies kann beispielsweise zur Unterstützung der Entladung der Behälter beitragen, da die entladenen Packstücke so relativ zum Behälter bzw. weg vom Behälter transportiert werden und dementsprechend Platz schaffen für weitere, noch zu entladene Packstücke.

Besonders einfach lassen sich die Behälter entlang der Behälterbahn bewegen, wenn es sich bei den Behältern um Rollbehälter handelt. Diese können einfach durch eine Behälterführung entlang der Behälterbahn verschoben werden. Andernfalls können die Behälter beispielsweise an einer Behälterführung hängend entlang der Behälterbahn bewegt werden.

Die Entleerung der Behälter durch Kippen derselben ist besonders einfach und zuverlässig möglich, wenn die Behälter seitlich offen sind und/oder eine kopfseitige Öffnung aufweisen. Dabei kommen bedarfsweise dauerhafte Öffnungen in Frage. Es können die Behälter aber auch vor der Entladung an der gewünschten Stelle geöffnet werden. Hierzu können die Behälter beispielsweise Klappen oder vor der Öffnung zu verspannende Riemen aufweisen, wie dies grundsätzlich bereits bekannt ist.

Konstruktiv besonders einfach ist es, wenn die Behälter während des Kippens der Behälter, während des Entladens der Packstücke und/oder während des Aufrichtens der Behälter auf einen Fahrweg verfahren werden, der uneben sein kann, um den Kippvorgang zu bewirken, die gekippte Stellung aufrechtzuerhalten und/oder den Kippvorgang rückgängig zu machen. Die Behälter müssen letztlich nur entlang des Fahrwegs bewegt werden und die Unebenheit des Fahrwegs sorgt zwangsweise für die Bewegungen der Behälter seitlich zur Behälterbahn. Um die Bewegung des Behälters zuverlässig vorgeben zu können, bietet es sich an, wenn die Behälter durch wenigstens eine Schiene geführt verfahren werden. Dabei können die Behälter bedarfsweise auch während der gesamten Bewegung der Behälter durch die Behälterführung entlang der gesamten Behälterbahn auf einem abschnittsweise unebenen Fahrweg und/oder geführt durch wenigstens eine Schiene verfahren werden.

Alternativ oder zusätzlich kann die Bewegung der Behälter zur Entladung derselben in einfacher Weise dadurch mitbestimmt werden, dass sich Behälter während des Kippens der Behälter, während der Entladung der Packstücke und/oder während des Aufrichtens der Behälter an einer die Neigung der Behälter definierenden Entladeschiene, die vorzugsweise als Entladewand ausgebildet sein kann, abstützen. Die Entladeschiene stützt die Behälter dabei in einer Ausrichtung, die das Kippen begrenzt, weil sich die Behälter an der Entladeschiene abstützen. Da die Behälter bezogen auf die Behälterbahn zur Seite geneigt bzw. gekippt werden, ist es dabei besonders zweckmäßig, wenn die Entladeschiene zwischen der Behälterbahn und dem Förderband vorgesehen ist. Bedarfsweise können die Behälter während der gesamten Bewegung der Behälter durch die Behälterführung entlang der gesamten Behälterbahn an einer die Neigung der Behälter definierenden Entladeschiene abgestützt werden.

Zudem kann wenigstens eine das Verfahren der Behälter über die Behälterführung führende Schiene so ausgebildet sein, dass ein übermäßiges Kippen und/oder ein nicht ausreichendes Kippen der Behälter zur Seite, etwa infolge eines sehr ungünstig beladenen Behälters vermieden wird, weil bei dem Verlauf der wenigstens einen Schiene nicht nur die Behälterbahn als solche, sondern auch das seitliche Kippen und erneute Aufrichten der Behälter berücksichtigt wird.

Damit die Packstücke nicht aus großer Höhe oder unkontrolliert aus den Behältern auf das Förderband fallen kann das Höhenniveau des Förderbands entlang der Behälterbahn entsprechend angepasst werden. So kann insbesondere dafür Sorge getragen werden, dass das Förderband im Bereich des Kippens der Behälter, im Bereich des Entladens der Packstücke und/oder im Bereich des Aufrichtens der Behälter unterschiedliche Höhenniveaus in Bezug auf die Behälter aufweist, insbesondere nach oben und/oder nach unten bewegt bzw. in entsprechenden Höhenniveaus angeordnet wird. Dabei erfolgt das Anheben und/oder Absenken des Förderbands vorzugsweise synchronisiert mit dem zunehmenden Kippwinkel und/oder dem abnehmenden Kippwinkel und/oder synchronisiert mit dem Fahrweg der Behälter und/oder synchronisiert mit dem Verlauf der wenigstens einen Schiene. In diesem Zusammenhang bietet es sich weiter an, dass sich das Förderband so angepasst an die Bewegung der sich angrenzend zum entsprechenden Abschnitt des Förderbands bewegenden Behälter nach oben und/oder nach unten bewegt, also angehoben und/oder abgesenkt wird, dass die Entladehöhe der Packstücke während des Entladens der Packstücke weniger als 0,6 m, vorzugsweise weniger als 0,5 m, insbesondere weniger als 0,4 m, beträgt. Bei einer entsprechenden Synchronisierung der Bewegungen bzw. Anordnung des Förderbands und der Behälter kann zudem bevorzugt die Entladehöhe wenigstens im Wesentlichen konstant gehalten werden, beispielsweise im Bereich von 300 mm.

Das Förderband kann noch stärker zur Unterstützung des Entladens genutzt werden, als lediglich angehoben und/oder abgesenkt zu werden. Es kann auch in Abhängigkeit der sich parallel zum Förderband bewegenden Behälter die Transportfläche des Förderbands geneigt werden. Das Förderband kann also abschnittsweise steiler und abschnittsweise flacher verlaufen, so dass die Transportfläche quer zur Bewegungsrichtung der Transportfläche abschnittsweise unterschiedliche Winkel zur Horizontalen bzw. zur Vertikalen einnimmt. In den Bereichen, in denen die Transportfläche eher vertikal und eher aufrecht neben einer Seite der Behälter verläuft, kann das Förderband beispielsweise ein versehentliches und/oder verfrühtes Entladen der Packstücke vermeiden. Die Packstücke können durch das Förderband wenigstens im Wesentlichen in den Behältern gehalten werden. In den Bereichen, in denen die Behälter gekippt werden und/oder gekippt sind, muss auch die Transportfläche des Förderbands in eine flachere, eher horizontaler verlaufende Ausrichtung gebracht werden, so dass das Förderband die aus dem Behälter rutschenden Packstücke aufnehmen kann. Wird die Kippbewegung der Behälter und die Neigung der Transportfläche des Förderbands aneinander angepasst, können die Packstücke allmählich und schonend entladen werden.

Mithin ist es ganz grundsätzlich bevorzugt, wenn in einem vorderen Bereich der Behälterbahn die Transportfläche des Förderbands und die dem Förderband zugewandte Seite der Behälter wenigstens abschnittsweise wenigstens im Wesentlichen parallel zueinander, insbesondere vertikal, angeordnet werden, jedoch in einem mittleren Bereich der Behälterbahn im Vergleich zum vorderen Bereich der Behälterbahn die Behälter und das Förderband gemeinsam seitlich zur Behälterbahn und in dieselbe Richtung geneigt werden. Dabei können die dem Förderband zugewandte Seite der Behälter und die Transportfläche des Förderbands wenigstens im Wesentlichen parallel zueinander bleiben. Erforderlich ist dies jedoch nicht. Dies ist vielmehr davon abhängig, wie die Entladung der Packstücke aus den Behältern erfolgen soll.

Dabei kann die Neigung der Behälter und die Neigung der Transportfläche des Förderbands so aufeinander abgestimmt werden, dass auch im mittleren Bereich der Behälterbahn die Transportfläche des Förderbands und die dem Förderband zugewandte Seite der Behälter wenigstens abschnittsweise wenigstens im Wesentlichen parallel zueinander verlaufen. Im mittleren Bereich kann dabei insbesondere die Transportfläche des Förderbands wenigstens im Wesentlichen horizontal angeordnet werden, um die Packstücke sicher aufnehmen zu können. Alternativ oder zusätzlich kann die der Transportfläche zugewandte Seite der Behälter im mittleren Bereich wenigstens im Wesentlichen horizontal angeordnet werden, um ein zuverlässiges und/oder rasches Entladen der Packstücke sicherzustellen.

Das Förderband und die Behälter können im mittleren Bereich aber auch so bewegt werden, dass im mittleren Bereich der Behälterbahn die Transportfläche des Förderbands und die dem Förderband zugewandte Seite der Behälter wenigstens abschnittsweise wenigstens im Wesentlichen V-förmig zueinander angeordnet sind. Wenn beispielsweise der Abstand zwischen dem Förderband und der Seite der Behälter weiter unten geringer und weiter oben größer ist, können die Packstücke verhältnismäßig schonend schichtweise von oben nach unten entladen werden und dabei in den V-förmigen Spalt zwischen der Transportfläche des Förderbands und den entsprechenden Behältern gelangen. Je weiter die Behälter und vorzugsweise die Transportfläche des Förderbands geneigt werden, desto weiter wird der Behälter geleert. Dabei kann sich der Winkel zwischen dem Förderband und der dem Förderband zugewandten Seite des Behälters, bedarfsweise schrittweise, stetig oder kontinuierlich, vergrößern, um das zunehmende Entladen der Packstücke zu begünstigen.

Je nach den verwendeten Behältern und/oder je nach den Packstücken kann es zweckmäßig sein, die Packstücke über die der Transportfläche des Förderbands zugewandte Seite des Behälters und/oder über die obere Öffnung, d. h. den Kopf, des Behälters zu entladen. Wenn die Behälter über die obere Öffnung, sozusagen "kopfüber" entleert werden, wird bedarfsweise vermieden, dass Behälter nicht vollständig geleert werden. Die Handhabung der Behälter wird dabei jedoch grundsätzlich aufwendiger. Weiter bevorzugt kann es dabei sein, wenn die Entleerung der Behälter im mittleren Bereich der Behälterbahn erfolgt.

Um sicherzustellen, dass die entladenen Packstücke vom Förderband zuverlässig aufgenommen werden, bietet es sich grundsätzlich an, dass sich die Transportfläche des Förderbands wenigstens abschnittsweise horizontal erstreckt. Dies bietet sich bedarfsweise in besonderem Maße im mittleren Bereich der Behälterbahn an, wenn dort die Entleerung der Behälter erfolgt.

Um die Behälter sicher zu entleeren, kann es sich je nach den verwendeten Behältern und/oder je nach den Packstücken anbieten, die Behälter zum Entladen wenigstens im Wesentlichen auf den Kopf zu drehen. Wenn die Entladung im mittleren Bereich der Behälterbahn erfolgt, ist es weiter bevorzugt, wenn das Drehen der Behälter auf den Kopf auch im mittleren Bereich der Behälterbahn erfolgt.

Die Entleerung der Behälter kann alternativ oder zusätzlich auch dadurch begünstigt werden, dass, insbesondere im mittleren Bereich der Behälterbahn, die Behälter relativ zur Transportfläche des Förderbands angehoben werden. Auf diese Weise kann beispielsweise der Abstand der Behälter zur Transportfläche des Förderbands schrittweise oder kontinuierlich erhöht werden, um so ein langsames und schonendes Entladen der Packstücke zu erreichen. Dieses Anheben der Behälter kommt insbesondere dann in Betracht, wenn der Abstand zwischen den Behältern und dem Förderband zu Beginn des Entladens so gering ist, dass keine oder nicht alle Packstücke entladen werden können. Die Entladung der Packstücke kann dann durch die Transportfläche des Förderbands behindert werden. Durch Anheben der Behälter wird der Abstand bzw. der Spalt zwischen den Behältern und dem Förderband größer, so dass weitere Packstücke aus den Behältern rutschen können. Grundsätzlich könnte, um den beschriebenen Effekt zu erreichen, alternativ oder zusätzlich auch die Transportfläche gegenüber dem Behälter abgesenkt werden. Inwieweit dies bevorzugt sein wird, hängt von den Randbedingungen des Einzelfalls ab.

Insbesondere in einem hinteren Bereich der Behälterbahn können die im vorderen und/oder mittleren Bereich der Behälterbahn die dem Förderband zugewandten Seiten der Behälter in die im Vergleich zum mittleren Bereich der Behälterbahn entgegengesetzte Richtung seitlich geneigt werden. So können die Behälter nach der Entladung der Packstücke wieder aufgerichtet werden, so dass die Behälter anschließend wieder mit anderen Packstücken beladen werden können.

Insbesondere um eine Ausgangsstellung der Behälter nach der Entladung derselben erneut wieder herzustellen, können die entladenen Behälter dann, insbesondere im hinteren Bereich der Behälterbahn, wieder aufgerichtet werden. Alternativ oder zusätzlich können die dem Förderband zuvor zugewandten Seiten der Behälter wenigstens im Wesentlichen vertikal ausgerichtet werden.

Damit es nicht zu unerwünschten Scherkräften auf die Packstücke oder einem unerwünschte Quetschung der Packstücke zwischen dem Behälter und der Transportbahn kommt, kann, insbesondere im vorderen Bereich der Behälterbahn, im mittleren Bereich der Behälterbahn und/oder im hinteren Bereich der Behälterbahn, die Transportgeschwindigkeit der Behälter entlang der Behälterbahn wenigstens im Wesentlichen gleich, insbesondere wenigstens im Wesentlichen identisch, mit der Transportgeschwindigkeit der Transportfläche des Förderbands gewählt werden. Zudem sollte in diesem Falle die Richtung der Geschwindigkeiten wenigstens im Wesentlichen übereinstimmen. Je nach der relativen Anordnungen der Behälter zu dem Förderband kann eine gleichförmige Geschwindigkeit und Transportrichtung von Behältern und Förderband dazu führen, dass die Behälter nicht bzw. nicht vollständig geleert werden können. Die bereits entleerten Packstücke können dann das Entladen weiterer Packstücke behindern. Anders ausgedrückt können die Packstücke der Behälter bedarfsweise nicht jeweils gemeinsam als ein separater Haufen aus dem Behälter entladen werden. Um das Entladen, bevorzugt in diesem Fällen, zu unterstützen, können, insbesondere im vorderen Bereich der Behälterbahn, im mittleren Bereich der Behälterbahn und/oder im hinteren Bereich der Behälterbahn, die Transportgeschwindigkeiten der Behälter entlang der Behälterbahn unterschiedlich sein als die Transportgeschwindigkeit der Transportfläche des Förderbands im zu den Behältern angrenzenden Bereich. Alternativ oder zusätzlich kann aber zu demselben Zweck bedarfsweise auch die Transportrichtung der Behälter anders sein als die Transportrichtung des Förderbands im an die Behälter angrenzenden Bereich. Hier kommen insbesondere wenigstens im Wesentlichen entgegengesetzte Transportrichtungen in Frage.

Nachfolgend wird die Erfindung anhand einer lediglich Ausführungsbeispiele darstellenden Zeichnung näher erläutert. In der Zeichnung zeigt
- Fig. 1: einen in einer Entladestation zu entladenen, Packstücke enthaltenen Behälter in einer perspektivischen Ansicht,
- Fig. 2: eine Entladestation zur Durchführung eines ersten erfindungsgemäßen Verfahrens zum Entladen von Packstücken aus Behältern in einer schematischen und perspektivischen Ansicht,
- Fig. 3A-D: die Entladestation aus der Fig. 1 mit einem Behälter in unterschiedlichen Stellungen entlang einer Behälterbahn in unterschiedlichen schematischen Schnittansichten,
- Fig. 4: eine Entladestation zur Durchführung eines zweiten erfindungsgemäßen Verfahrens zum Entladen von Packstücken aus Behältern in einer schematischen und perspektivischen Ansicht,
- Fig. 5A-D: die Entladestation aus der Fig. 3 mit einem Behälter in unterschiedlichen Stellungen entlang einer Behälterbahn in unterschiedlichen schematischen Schnittansichten,
- Fig. 6: eine Entladestation zur Durchführung eines dritten erfindungsgemäßen Verfahrens zum Entladen von Packstücken aus Behältern in einer schematischen und perspektivischen Ansicht und
- Fig. 7A-D: die Entladestation aus der Fig. 5 mit einem Behälter in unterschiedlichen Stellungen entlang einer Behälterbahn in unterschiedlichen schematischen Schnittansichten.

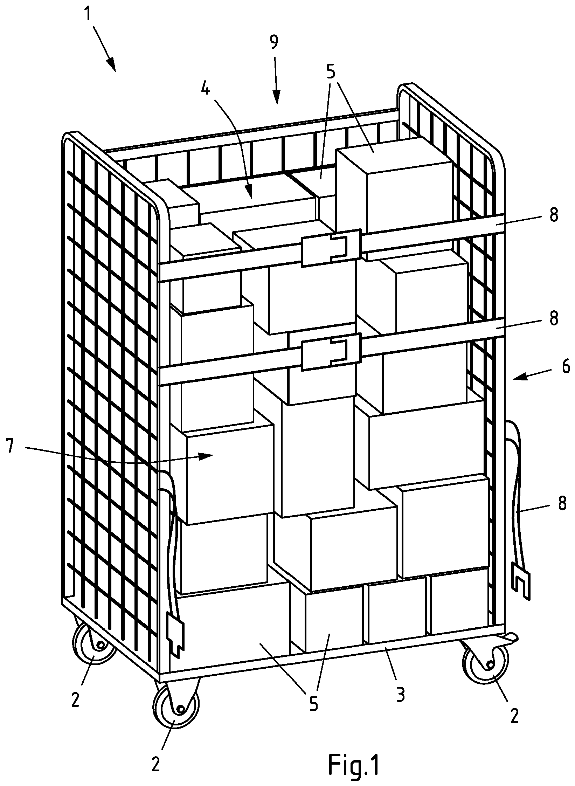

In der Fig. 1 ist beispielhaft ein Behälter 1 dargestellt, der in besonderem Maße für die Verwendung mit einer Entladestation geeignet ist. Grundsätzlich sind aber auch andere Behälter geeignet. Der Behälter der Fig. 1 ist in Form eines sogenannten Rollbehälters ausgebildet, der bodenseitig Rollen 2 aufweist, mit denen der Behälter 1 entlang eines Fahrwegs verfahren werden kann. Oberhalb des Bodens 3 bildet der Behälter 1 einen Laderaum 4 zur Aufnahme von Packstücken 5. Damit der Behälter 1 einfach mit Packstücken 5 beladen werden kann, ist in wenigstens einer Seitenwand 6 des Behälters 1 eine seitliche Öffnung 7 vorgesehen, die wenigstens teilweise geschlossen werden kann, damit keine Packstücke 5 versehentlich herausfallen. Die Öffnung 7 kann sich über die gesamte Höhe der entsprechenden Seitenwand 6 des Behälters 1 erstrecken, wie dies in der Fig. 1 dargestellt ist. Alternativ kann sich die seitliche Öffnung 7 aber auch nur über einen Teil der Seitenwand 6 erstrecken. Zum wenigstens teilweisen Verschließen der seitlichen Öffnung 7 sind an dem Behälter über die Höhe der Öffnung 7 mehrere Gurte 8 verteilt angeordnet, die quer zur Öffnung 7 abgespannt bzw. wenigstens einseitig wieder gelöst werden können. Alternativ könnte aber beispielsweise auch eine Klappe zum Verschließen der Öffnung 7 vorgesehen sein, die zum Freigeben der Öffnung 7 beispielsweise in eine Öffnungsstellung geschwenkt werden kann. Kopfseitig ist der dargestellte und insoweit bevorzugte Behälter 1 offen, so dass Packstücke 5 bedarfsweise auch von oben beladen und/oder über die Kopfseite 9 entleert werden könnten.

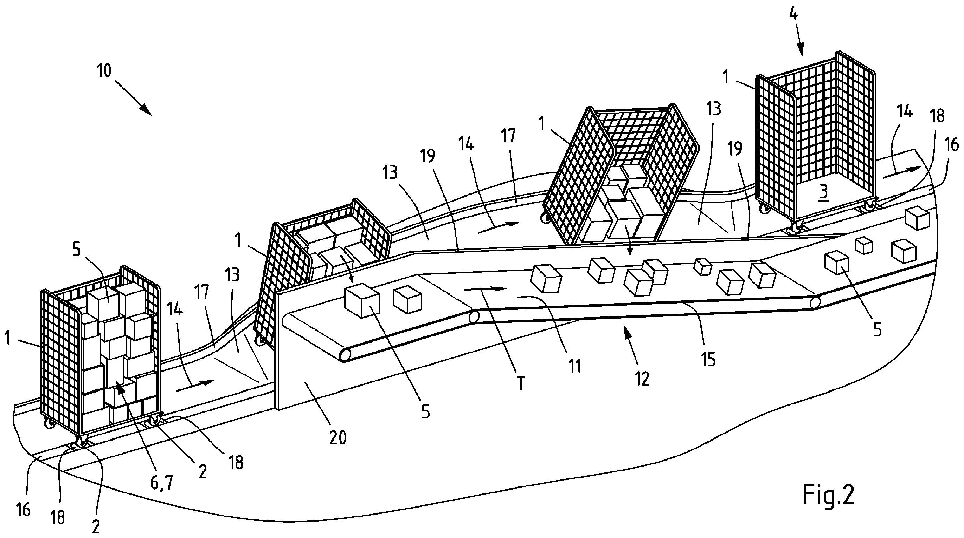

In der Fig. 2 ist eine Entladestation zum Entladen von Packstücken aus einem Behälter dargestellt, die ein Förderband umfasst, das abschnittsweise seitlich neben einem Fahrweg zum Verfahren von Behältern entlang einer Behälterbahn angeordnet ist. Dabei wird die dem Förderband zugewandte Seite der Behälter vorzugsweise beim Zuführen der Behälter zur Entladestation geöffnet. Die Behälter können dabei dem Behälter aus der Fig. 1 entsprechen. Zwingend ist dies jedoch nicht.

Bei der dargestellten und insoweit bevorzugten Entladestation 10 ist die Transportfläche 11 des Förderbands 12 in Querrichtung zur Transportrichtung T des Förderbands 12 wenigstens im Wesentlichen horizontal ausgerichtet. Zudem erstreckt sich das Förderband 12 im Wesentlichen parallel zum Fahrweg 13 und der Behälterbahn 14 der zu entladenden Behälter 1, wobei die Transportfläche 11 des Förderbands 12 im Bereich des Obertrums 15 in der Transportrichtung T und in Bezug auf die parallel entlang der Behälterbahn 14 geführten Behälter 1 abschnittsweise abgesenkt wird. Dabei wird die Transportfläche 11 des Förderbands 12 bei der dargestellten und insoweit bevorzugten Entladestation 10 stetig und mit einer konstanten Steigung abgesenkt. Dies könnte bedarfsweise aber auch anders realisiert werden.

Der Fahrweg 13 zum Verfahren der Behälter 1 entlang der Behälterbahn 14 ist seinerseits wenigstens abschnittsweise wenigstens im Wesentlichen parallel zu dem Förderband 12 ausgebildet. Jedoch ist auch der Fahrweg 13 nicht eben ausgebildet. Der Fahrweg 13 wird in Richtung der Behälterbahn 14 abschnittsweise angehoben. Dabei ist der maximale Höhenunterschied des Fahrwegs 13 auf der von dem Förderband 12 abgewandten Seite größer als auf der dem Förderband 12 zugewandten Seite des Fahrwegs 13. Bedarfsweise kann der Fahrweg 13 auf der dem Förderband 12 zugewandten Seite sogar eben ausgebildet sein.

Da es sich bei den Behältern 1 vorliegend um Rollbehälter handelt, die Rollen 2 zum Verfahren der Behälter 1 auf dem Untergrund aufweisen, sind für die Vorgabe der Bewegung der Behälter 1 entlang des Fahrwegs 13 bzw. entlang der Behälterbahn 14 zwei Schienen 16,17 vorgesehen, die bei der dargestellten und insoweit bevorzugten Entladestation 10 den beiden gegenüberliegenden Seiten der Behälter 1 zugeordnet sind. Angrenzend zu dem Förderband 12 ist eine Schiene 16 vorgesehen, in der Rollen 2 der Behälter 1 während des Verfahrens entlang der Behälterbahn 14 aufgenommen sind. Die Rollen 2 der Behälter 1 werden dabei von einer Behälterführung 18 formschlüssig ergriffen und zusammen mit den Behältern 1 entlang der Schiene 15 verschoben. Die Behälter 1 werden mit Hilfe der Behälterführung 18 mit vorgegebenen Geschwindigkeiten nacheinander entlang der Behälterbahn 14 verfahren. Grundsätzlich würde es auch ausreichen, wenn pro Behälter 1 nur eine Rolle 2 in der Schiene 16 aufgenommen und/oder von der Behälterführung 18 ergriffen würde. Auch kann eine Behälterführung 18 vorgesehen sein, welche die Behälter 1 zum Führen entlang der Behälterbahn 14 auf andere Weise als an den Rädern 2 greift.

Die andere Schiene 17 dient bei der dargestellten und insoweit bevorzugten Entladestation 10 als Führungsschiene, welche die seitliche Neigung der Behälter 1 durch eine formschlüssige Anlage der Behälter 1 an der Führungsschiene 17 begrenzt. Zur Verringerung der Reibung an den Behältern 1 kann vorgesehen sein, dass die Schiene 17 erst dann in Anlage mit den Behältern 1 gelangt, wenn diese zur Seite umzukippen neigen. Alternativ oder zusätzlich könnte die Schiene 17 auch Rollen 2 für die Anlage an den Behältern 1 aufweisen. Auch könnte ein formschlüssiges Eingreifen der zweiten Schiene 17 und der Behälter 1 beim oder zum Bewegen entlang der Behälterbahn 14 vorgesehen sein, was jedoch grundsätzlich zu einem höheren konstruktiven Aufwand führen würde.

Zwischen dem Förderband 12 und dem Fahrweg 13 der Behälter 1 bzw. der Behälterbahn 14 ist wenigstens abschnittsweise eine Entladeschiene 19 vorgesehen, die bei der dargestellten und insoweit bevorzugten Entladestation 10 durch ein oberes Ende einer Entladewand 20 gebildet wird. Die Behälter 1 werden, während sie entlang der Behälterbahn 14 bewegt werden, aufgrund des unebenen Fahrwegs 13 für die Behälter 1 seitlich in Richtung des Förderbands 12 gekippt und anschließend wieder aufgerichtet. Die Entladeschiene 19 dient dabei dazu, die unterschiedlichen Neigungen der Behälter 1 bzw. den Verlauf der Neigung der Behälter 1 entlang der Behälterbahn 14 vorzugeben und zu kontrollieren. Während die Behälter 1 zur Seite gekippt werden, zur Seite gekippt sind und/oder wieder aufgerichtet werden, stützen sich die Behälter 1 mit der in Richtung des Förderbands 12 weisenden Seite auf der Entladeschiene 19 ab. Gleichzeitig wird bei der dargestellten und insoweit bevorzugten Entladestation 10 durch die Schiene 17 auf der dem Förderband 12 abgewandten Seite verhindert, dass der Behälter 1 über die Entladeschiene 19 hinüber auf das Förderband 12 kippt, und zwar durch eine formschlüssige Anlage der Behälter 1 an der besagten Schiene 17. Die Kontur der Entladeschiene 19 und die Kontur des Fahrwegs 13 für die Behälter 1 entlang der Behälterbahn 14 bestimmen den Verlauf der seitlichen Neigung der Behälter 1 und damit die Entladung der Packstücke 5 aus den Behältern 1. Zur Verringerung der Reibung zwischen der Entladeschiene 19 und den Behältern 1 könnte die Führungsschiene 19 auch Rollen 2 für die Anlage an den Behältern 1 aufweisen.

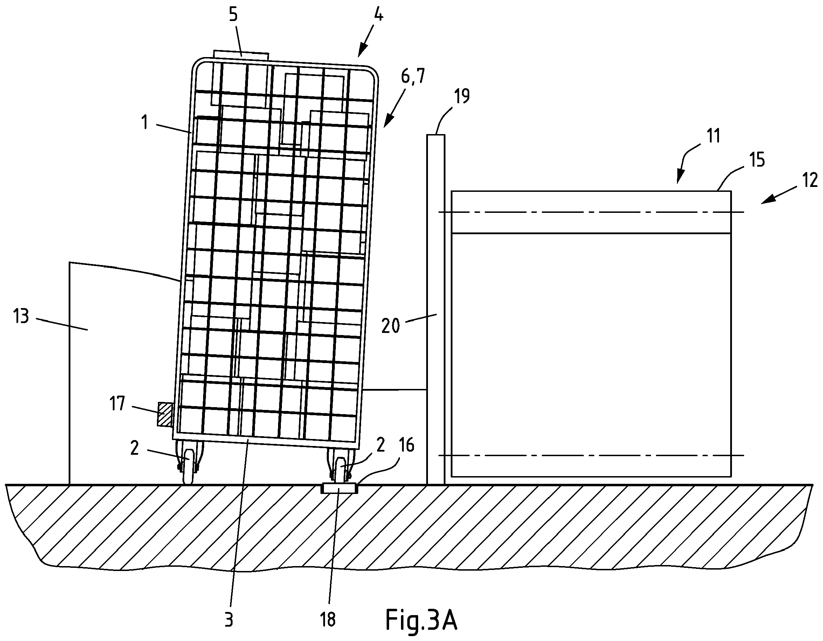

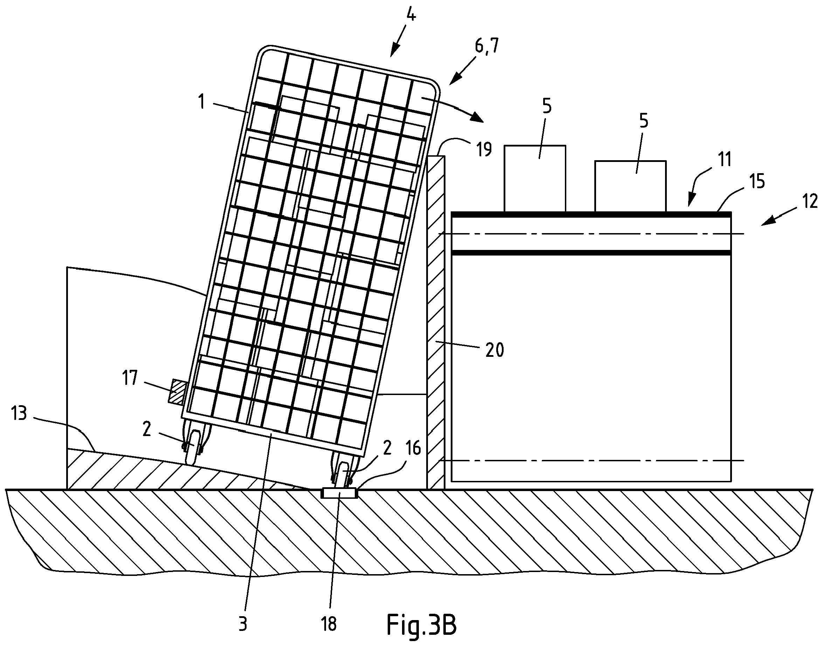

Zunächst ist der Behälter 1, wie dies in der Fig. 3A dargestellt ist, wenigstens im Wesentlichen aufrecht angeordnet und wird der Behälter 1 von der Behälterführung 18 in der Transportrichtung der Behälter 1 geführt. Dabei gelangt der Behälter 1 allmählich auf einen zur Seite in Richtung des Förderbands 12 geneigten Abschnitt des Fahrwegs 13 , wie dies in der Fig. 3B dargestellt ist. Auf diese Weise wird der Behälter auf der von dem Förderband 12 abgewandten Seiten angehoben und in Richtung des Förderbands 12 geneigt. Dabei wird der Behälter 1 zudem durch eine Anlage an der Entladeschiene 19 und bedarfsweise auch durch eine Anlage an der als Führungsschiene ausgebildeten Schiene 17 auf der dem Förderband 12 abgewandten Seite des Behälters 1 in einer bestimmten Neigung gehalten. Dabei ist das Förderband 12 bei der dargestellten und insoweit bevorzugten Entladestation 10 etwa unterhalb der Entladeschiene 19 angeordnet, so dass die obersten Packstücke 5 im Behälter 1 aus dem Behälter 1 heraus und aus einer recht geringen Höhe auf das Förderband 12 fallen. Die Fallhöhe kann durch Anpassung des vertikalen Abstands zwischen der Entladeschiene 19 und der Transportfläche 11 des Förderbands 12 eingestellt werden.

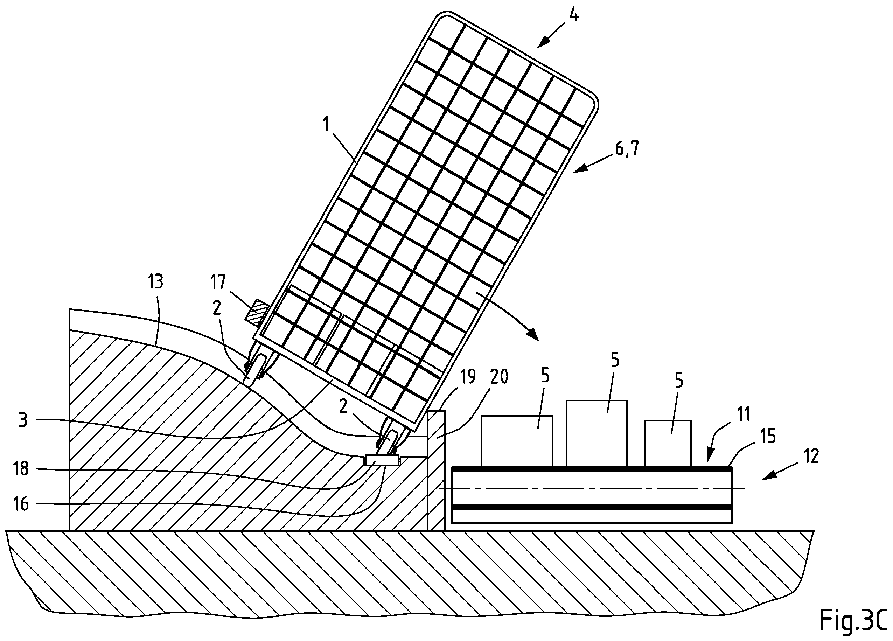

Auf dem weiteren Weg des Behälters 1 entlang des Fahrwegs 13 bzw. entlang der Behälterbahn 14 wird der Behälter 1 infolge einer größeren seitlichen Neigung des Fahrwegs 13 weiter zur Seite in Richtung des Förderbands 12 geneigt, wie dies in der Fig. 3C dargestellt ist. Ferner wird der Behälter 1 bei der dargestellten und insoweit bevorzugten Entladestation 10 insgesamt etwas angehoben. Zudem wird die Entladeschiene 19 abgesenkt, so dass auch die unteren Ebenen der Packstücke 5 aus den Behältern 1 entladen werden können. Da die seitliche Neigung des Behälters 1 entlang der Behälterbahn 13 zunimmt, während das Förderband 12 und die Entladeschiene 19 gegenüber dem Behälter 1 abgesenkt werden, werden die Packstücke 5 nacheinander von oben nach unten bezogen auf den Behälter 1 entleert, wobei die Packstücke 5 an unterschiedlichen Stellen entlang der Behälterbahn 14 stets aus einer verhältnismäßig geringen Höhe auf des Förderband 12 fallen. Wenn die Verläufe von Fahrweg 13, Entladeschiene 19 und Förderband 12 entsprechend aneinander angepasst sind, kann die Fallhöhe der Packstücke 5 entlang der Behälterbahn 14 in etwa konstant und/oder auf einem niedrigen Niveau gehalten werden.

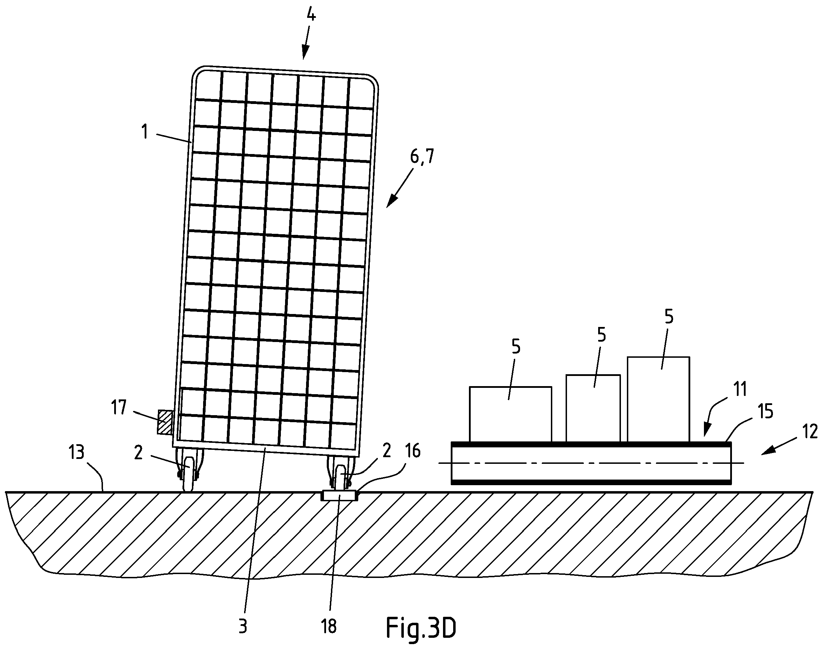

Nachdem alle Packstücke 5 aus den Behältern 1 entladen sind, geht der Fahrweg 13 wieder in einen ebenen Abschnitt über, so dass sich die Behälter 1 währenddessen aufrichten, wie dies in der Fig. 3D dargestellt ist. Sodann können die Behälter 1 auch bedarfsweise von der Behälterführung 18 aus der Schiene 16 heraus bewegt werden. Die Behälter 1 können dann an einen anderen Bestimmungsort verbracht werden, während die entladenen Packstücke 5 beispielsweise einer Sortierung zugeführt werden.

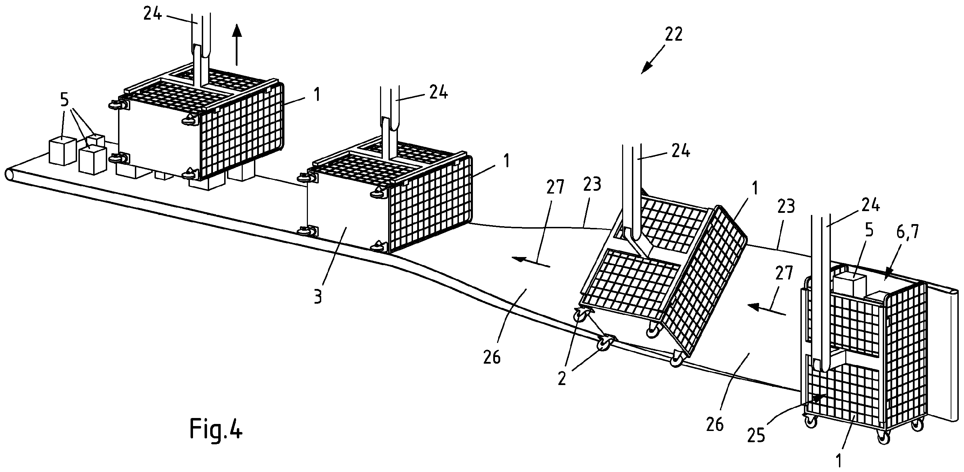

In der Fig. 4 ist eine weitere Entladestation 22 zum Entladen von Packstücken 5 aus Behältern 1 in einer schematischen und perspektivischen Ansicht dargestellt. Die Entladestation 22 umfasst ein Förderband 23 und eine Behälterführung 24, die bei der dargestellten und insoweit bevorzugten Entladestation 22 an der Rückseite 25 der Behälter 1 angreift. Andere Behälterführungen wären aber ebenfalls denkbar. Bei der Übergabe der Behälter 1 an die Behälterführung 24 wird die dem Förderband 12 zugewandte Seitenwand 6 der Behälter 1 vorzugsweise geöffnet. Die Behälter 1 können dabei dem Behälter 1 aus der Fig. 1 entsprechen. Zwingend ist dies jedoch nicht.

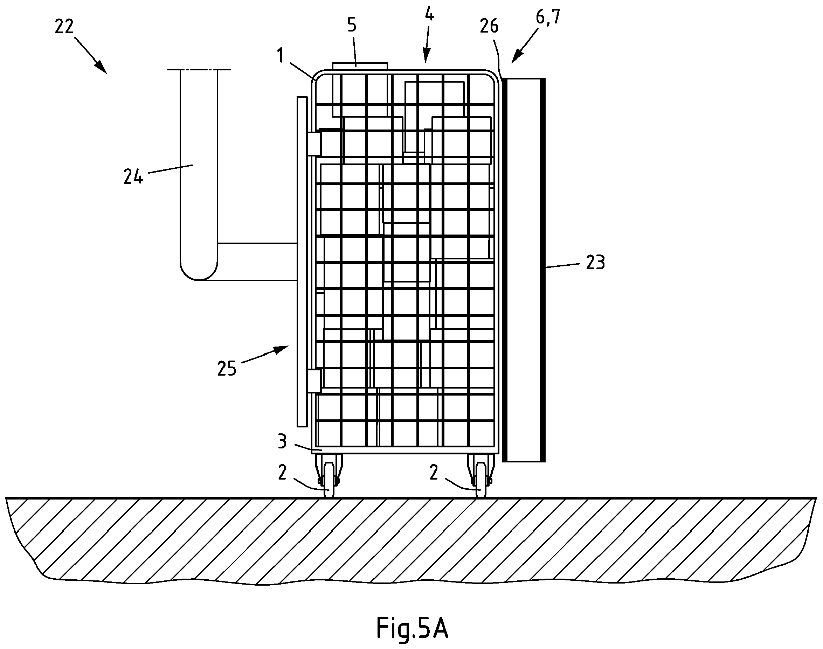

Sodann werden die aufrecht stehenden Behälter 1, wie dies in der Fig. 5A im Detail dargestellt ist, mit der geöffneten und wenigstens im Wesentlichen vertikalen Seitenwand 6 nahe an eine ebenfalls aufrecht stehende und wenigstens im Wesentlichen vertikal angeordnete Transportfläche 26 des Förderbands 23 positioniert. Der Behälter 1 und die Transportfläche 26 des Förderbands 23 können dabei wenigstens im Wesentlichen parallel zueinander ausgerichtet sein. Durch den geringen Abstand zwischen der offenen Seitenwand 6 des Behälters 1 und der Transportfläche 26 des Förderbands 23 wird vermieden, dass bereits Packstücke 5 aus dem Behälter 1 herausfallen. Die Behälter 1 werden sodann, vorzugsweise mit etwa derselben Geschwindigkeit wie die Transportfläche 26 des Förderbands 23, in Richtung der Behälterbahn 27 bewegt.

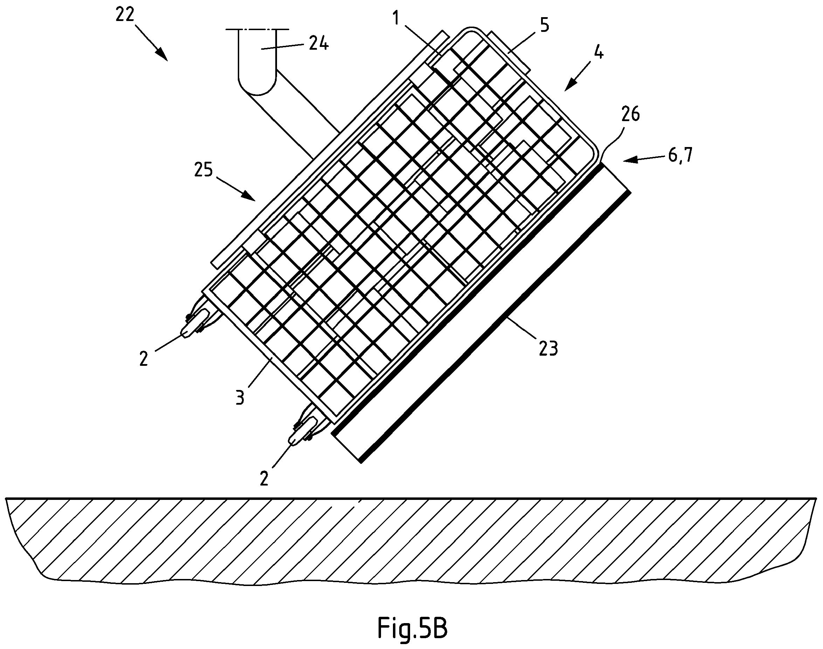

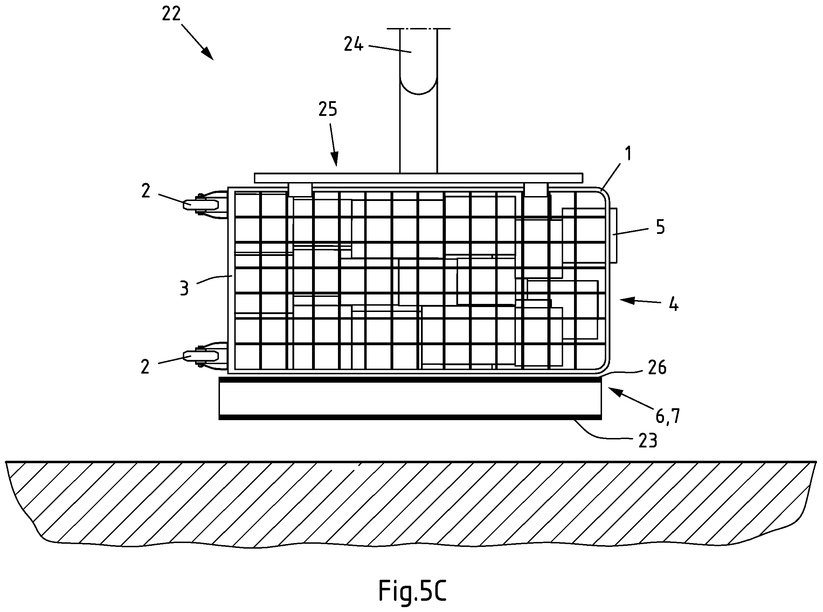

Dabei werden die Behälter 1, wie dies in der Fig. 5B im Detail dargestellt ist, langsam zur Seite in Richtung des Förderbands 23 geneigt und wird die Transportfläche 26 des Förderbands 23 währenddessen korrespondierend zu der geöffneten Seitenwand 6 der Behälter 1 zur gleichen Seite geneigt. Die geöffnete Seitenwand 6 der Behälter 1 und die angrenzende Transportfläche 26 des Förderbands 23 bleiben dabei wenigstens im Wesentlichen parallel zueinander ausgerichtet, um ein Herausfallen der Packstücke 5 aus den Behältern 1 zu vermeiden. Bei der dargestellten und insoweit bevorzugten Entladestation 22 wird sowohl die geöffnete Seitenwand 6 der Behälter 1 als auch die Transportfläche 26 des Förderbands 23 in eine wenigstens im Wesentlichen horizontale Lage geschwenkt, wie dies in der Fig. 5C im Detail dargestellt ist. Auch dann sind die geöffnete Seite der Behälter 1 und die angrenzende Transportfläche 26 des Förderbands 23 vorzugsweise noch im Wesentlichen parallel zueinander ausgerichtet. Damit keine Packstücke 5 unkontrolliert über die Kopfseite 9 der Behälter herausrutschen können, kann die Kopfseite 9 der Behälter 1 bedarfsweise, etwa durch Gurte oder durch eine bauliche Maßnahme senkrecht zur Oberfläche des Förderbands 23 verschlossen sein.

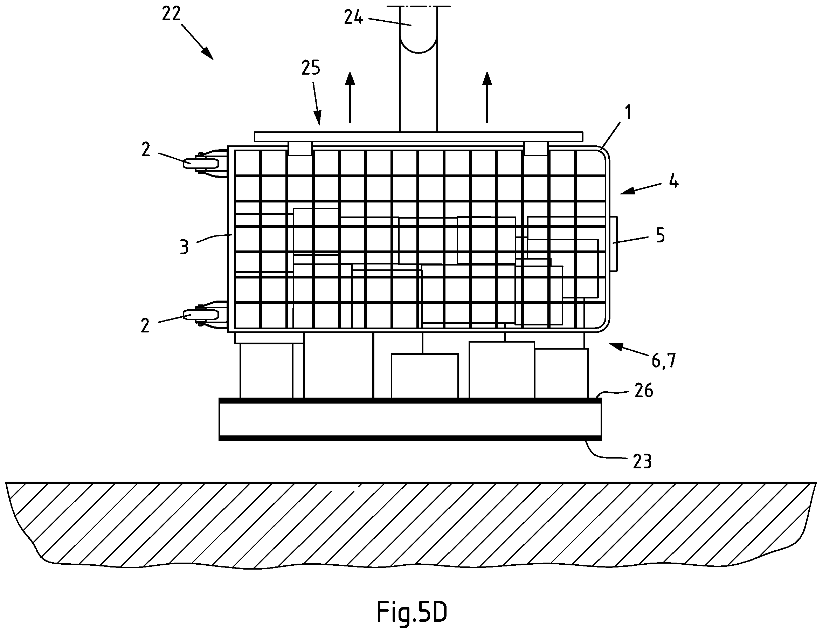

Anschließend hebt die Behälterführung 24 die Behälter 1, wie dies in der Fig. 5D im Detail dargestellt ist, gegenüber der Transportfläche 26 des Förderbands 23 an, so dass die Packstücke 5 aus dem Behälter 1 rutschen und von dem Förderband 23 separat weiter transportiert werden können. Es könnte alternativ oder zusätzlich auch die Transportflächen 26 des Förderbands 23 gegenüber den Behältern 1 abgesenkt werden. Anschließend werden die Behälter 1 von der Behälterführung 24 bevorzugt wieder aufgerichtet und sodann von der Behälterführung 24 getrennt. Die Behälter 1 können dann separat zu einem Bestimmungsort transportiert und dort bedarfsweise mit anderen Packstücken 5 beladen werden, während die entladenen Packstücke 5 beispielsweise einer Sortierung zugeführt werden.

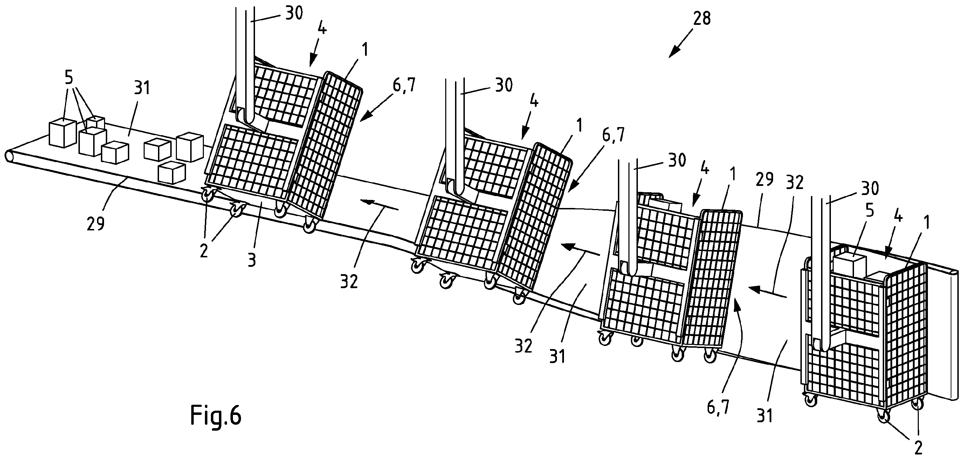

In der Fig. 6 ist eine alternative Entladestation 28 zum Entladen von Packstücken 5 aus Behältern 1 in einer schematischen und perspektivischen Ansicht dargestellt. Die Entladestation 28 umfasst ein Förderband 29 und eine Behälterführung 30, die bei der dargestellten und insoweit bevorzugten Entladestation 28 an der Rückseite 25 der Behälter 1 angreift. Andere Behälterführungen wären aber ebenfalls denkbar. Bei der Übergabe der Behälter 1 an die Behälterführung 30 wird die dem Förderband 29 zugewandte Seitenwand 6 der Behälter 1 vorzugsweise geöffnet. Die Behälter 1 können dabei dem Behälter 1 aus der Fig. 1 entsprechen. Zwingend ist dies jedoch nicht.

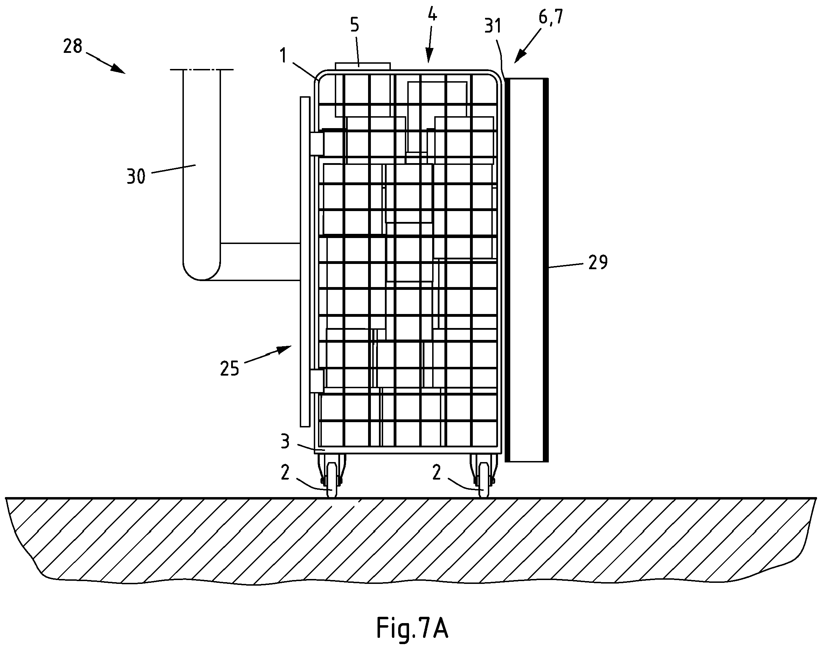

Sodann werden die aufrecht stehenden Behälter 1, wie dies in der Fig. 7A im Detail dargestellt ist, mit der geöffneten und wenigstens im Wesentlichen vertikalen Seitenwand 6 in geringem Abstand zu einer ebenfalls aufrecht stehenden und wenigstens im Wesentlichen vertikal angeordneten Transportfläche 31 des Förderbands 29 positioniert. Der Behälter 1 und die Transportfläche 31 des Förderbands 29 können dabei wenigstens im Wesentlichen parallel zueinander ausgerichtet sein. Durch den geringen Abstand zwischen der offenen Seitenwand 6 des Behälters 1 und der Transportfläche 31 wird vermieden, dass bereits Packstücke 5 aus dem Behälter 1 herausfallen. Die Behälter 1 werden sodann, beispielsweise mit etwa derselben Geschwindigkeit wie die Transportfläche 31 des Förderbands 29, in Richtung der Behälterbahn 32 bewegt.

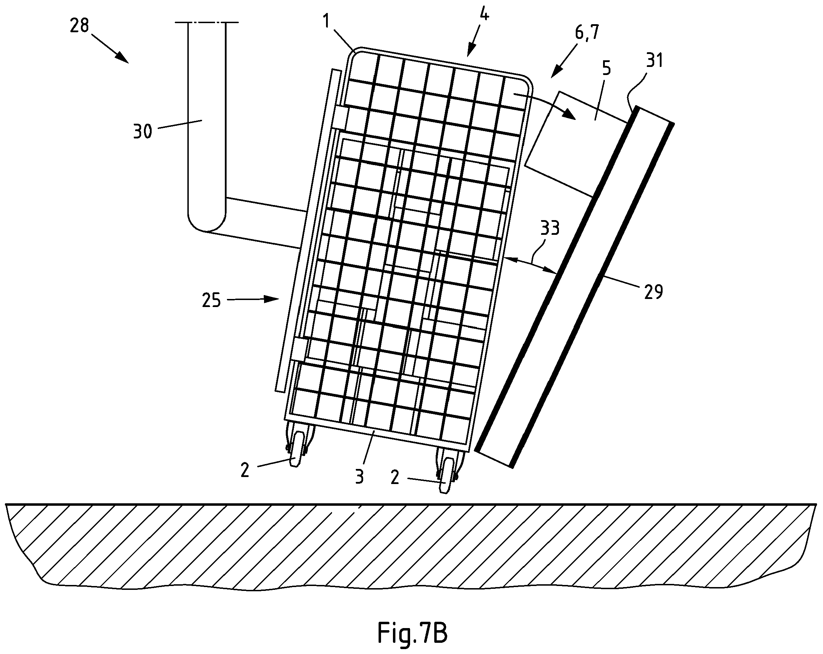

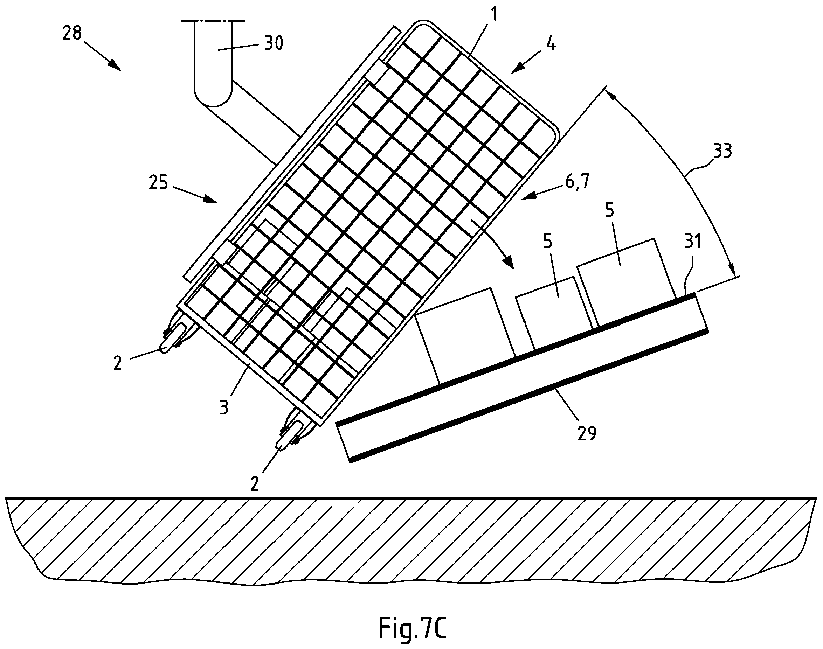

Dabei werden die Behälter 1, wie dies in der Fig. 7B im Detail dargestellt ist, langsam zur Seite in Richtung des Förderbands 29 geneigt. Die Transportfläche 31 des Förderbands 29 wird währenddessen korrespondierend zu der geöffneten Seitenwand 6 der Behälter 1 zur gleichen Seite geneigt. Die Transportfläche 31 des Förderbands 29 wird währenddessen jedoch jeweils weiter zur Seite geneigt als die angrenzende Seite des Behälters 1, so dass die entsprechende Seite des Behälters 1 und die Transportfläche 31 des Förderbands 29 V-förmig angeordnet sind. Mit zunehmendem Verschieben der Behälter 1 in Richtung der Behälterbahn 32 nimmt der Öffnungswinkel 33, dieser V-förmigen Anordnung zu, wie dies im Detail in der Fig. 7C dargestellt ist.

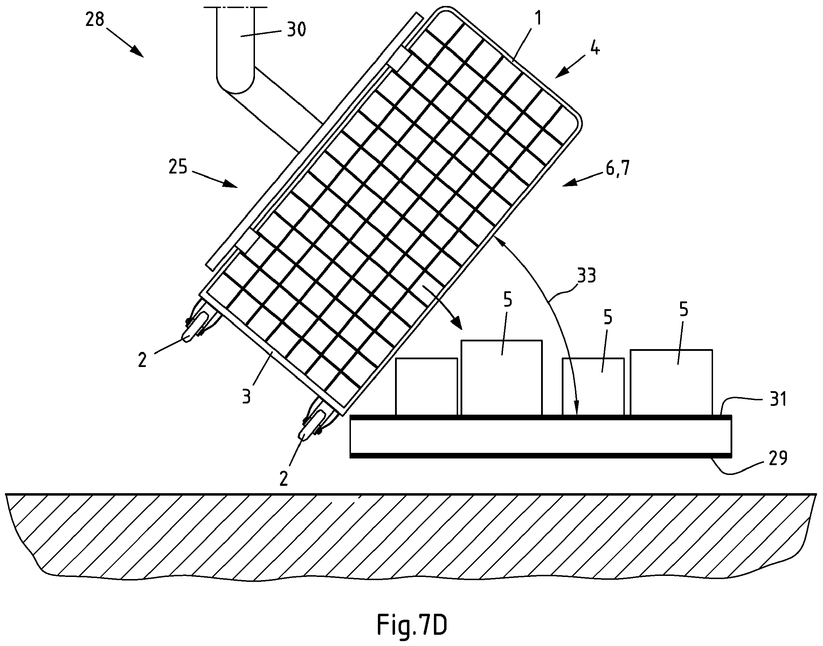

Bei der dargestellten und insoweit bevorzugten Entladestation 28 wird die Transportfläche 31 des Förderbands 29 in eine wenigstens im Wesentlichen horizontale Lage geschwenkt, wie dies in der Fig. 7D im Detail dargestellt ist. Die angrenzende Seite der Behälter 1 bleibt aber weiter schräg ausgerichtet. Durch die zunehmende Neigung der Behälter 1 und der Transportfläche 31 des Förderbands 29, die dabei stets V-förmig zueinander angeordnet sind, wobei der Öffnungswinkel 33 dieser V-förmigen Anordnung stetig zunimmt, rutschen die Packstücke 5 nacheinander von oben nach unten aus den Behältern 1 heraus und werden von der Transportfläche 31 des Förderbands 29 aufgefangen. Wenn die Transportfläche 31 des Förderbands 29 sich dabei vorzugsweise wenigstens im Wesentlichen mit derselben Geschwindigkeit bewegt, wie die Behälter 1 von der Behälterführung 30 entlang der Behälterbahn 32 bewegt werden, wird ein Quetschen der Packstücke 5 zwischen den Behältern 1 und dem Förderband 29 ebenso vermieden, wie ein Herunterfallen von dem Förderband 29. Unterschiedliche Geschwindigkeit sind aber dennoch denkbar, wenn dadurch das Entladen, insbesondere das vollständige Entladen der Behälter,

Nachdem die Behälter 1 entleert und die Packstücke an das Förderband 29 abgegeben worden sind, werden die Behälter 1 von der Behälterführung 30 bevorzugt wieder aufgerichtet und sodann von der Behälterführung 30 getrennt. Die Behälter 1 können dann separat zu einem Bestimmungsort transportiert und dort bedarfsweise mit anderen Packstücken 5 beladen werden, während die entleerten Packstücke 5 beispielsweise einer Sortierung zugeführt werden.

### Bezugszeichenliste

- 1: Behälter
- 2: Rolle
- 3: Boden
- 4: Laderaum
- 5: Packstück
- 6: Seitenwand
- 7: Öffnung
- 8: Gurt
- 9: Kopfseite
- 10: Entladestation
- 11: Transportfläche
- 12: Förderband
- 13: Fahrweg
- 14: Behälterbahn
- 15: Obertrum
- 16,17: Schiene
- 18: Behälterführung
- 19: Entladeschiene
- 20: Entladewand
- 22: Entladestation
- 23: Förderband
- 24: Behälterführung
- 25: Rückseite
- 26: Transportfläche
- 27: Behälterbahn
- 28: Entladestation
- 29: Förderband
- 30: Behälterführung
- 31: Transportfläche
- 32: Behälterbahn
- 33: Öffnungswinkel

## Patentansprüche

1. Verfahren zum Entladen von Packstücken (5) aus einem Behälter (1), insbesondere Rollbehälter, mit einer Behälterführung (18,24,30) und einem Förderband (12,23,29),
- bei dem die Behälter (1) von der Behälterführung (18,24,30) nacheinander entlang einer Behälterbahn (14,27,32) bewegt werden,
- bei dem sich das Förderband (12,23,29) wenigstens abschnittsweise seitlich und wenigstens im Wesentlichen parallel zur Behälterbahn(14,27,32) erstreckt,
- bei dem die Behälter (1) während der über die Behälterbahn (14,27,32) vorgegebene Bewegung entlang der Behälterführung (18,24,30) sowie entlang des Förderbands (12,23,29) seitlich in Richtung des Förderbands (12,23,29) gekippt werden,
- bei dem die Packstücke (5) aus dem gekippten Behälter (1) auf das Förderband (12,23,29) rutschen,
- bei dem das Förderband (12,23,29) die aus dem Behälter (1) gerutschten Packstücke (5) weitertransportiert und
- bei dem die ausgeleerten, gekippten Behälter (1) während der über die Behälterbahn (14,27,32) vorgegebenen Bewegung entlang der Behälterführung (18,24,30) wieder aufgerichtet werden.

2. Verfahren nach Anspruch 1,
bei dem die Behälter (1) während des Kippens der Behälter (1), während des Entladens der Packstücke (5) und/oder während des Aufrichtens der Behälter (1), vorzugsweise während der gesamten Bewegung der Behälter (1) durch die Behälterführung (18,24,30) entlang der gesamten Behälterbahn (14,27,32), kontinuierlich, insbesondere mit wenigstens im Wesentlichen konstanter Geschwindigkeit, entlang der Behälterbahn (14,27,32) bewegt werden.

3. Verfahren nach Anspruch 1 oder 2,
- bei dem die Behälter (1) während des Kippens und/oder während des Aufrichtens um eine Achse wenigstens im Wesentlichen parallel zur Behälterbahn (14,27,32) geschwenkt werden und/oder
- bei dem die Behälter (1) während des Kippens und/oder während des Aufrichtens mit einer wenigstens im Wesentlichen gleichförmigen, insbesondere wenigstens im Wesentlichen konstanten, Winkelgeschwindigkeit zur Seite geschwenkt werden.

4. Verfahren nach einem der Ansprüche 1 bis 3,
- bei dem die Behälter (1) während des Kippens der Behälter (1), während des Entladens der Packstücke (5) und/oder während des Aufrichtens der Behälter (1) entlang einer Behälterbahn (14,27,32) wenigstens im Wesentlich in dieselbe Richtung und/oder mit wenigstens im Wesentlichen derselben Geschwindigkeit bewegt werden wie der seitlich zu den Behältern (1) angeordnete Bereich des Förderbands (12,23,29) und/oder
- bei dem die Behälter (1) während des Kippens der Behälter (1), während des Entladens der Packstücke (5) und/oder während des Aufrichtens der Behälter (1) entlang einer Behälterbahn (14,27,32) in eine unterschiedliche, insbesondere entgegengesetzte, Richtung und/oder mit einer anderen Geschwindigkeit bewegt werden als der seitlich zu den Behältern (1) angeordnete Bereich des Förderbands (12,23,29).

5. Verfahren nach einem der Ansprüche 1 bis 4,
bei dem die Behälter (1) Rollbehälter und/oder seitlich offene Behälter (1) sind.

6. Verfahren nach Anspruch 5,
bei dem die Behälter (1) während des Kippens der Behälter (1), während des Entladens der Packstücke (5) und/oder während des Aufrichtens der Behälter (1), vorzugsweise während der gesamten Bewegung der Behälter (1) durch die Behälterführung (18) entlang der gesamten Behälterbahn (14), auf einem abschnittsweise unebenen Fahrweg (13) und/oder geführt durch wenigstens eine Schiene (16) verfahren werden.

7. Verfahren nach einem der Ansprüche 1 bis 6,
bei dem sich die Behälter (1) während des Kippens der Behälter (1), während des Entladens der Packstücke (5) und/oder während des Aufrichtens der Behälter (1), vorzugsweise während der gesamten Bewegung der Behälter (1) durch die Behälterführung (18) entlang der gesamten Behälterbahn (14), an einer die Neigung der Behälter (1) definierenden Entladeschiene (19), insbesondere Entladewand (20), zwischen der Behälterbahn (14) und dem Förderband (12) abstützen.

8. Verfahren nach einem der Ansprüche 1 bis 7,
- bei dem das Förderband (12) im Bereich des Kippens der Behälter (1), im Bereich des Entladens der Packstücke (5) und/oder im Bereich des Aufrichtens der Behälter (1) unterschiedliche Höhenniveaus in Bezug auf die Behälter (1) aufweisen, vorzugsweise, insbesondere synchronisiert, mit dem Kippen und/oder Aufrichten und/oder synchronisiert mit dem Fahrweg (13) und/oder mit der wenigstens einen Schiene (16), nach oben und/oder nach unten bewegt wird und
- bei dem, vorzugsweise, das Förderband (12) so nach oben und/oder nach unten bewegt wird, dass die Entladehöhe der Packstücke (5) während des Entladens der Packstücke (5), insbesondere wenigstens im Wesentlichen konstant, weniger als 0,6 m, vorzugsweise weniger als 0,5 m, insbesondere wenigster als 0,4 m, beträgt.

9. Verfahren nach einem der Ansprüche 1 bis 8,
- bei dem in einem vorderen Bereich der Behälterbahn (27,32) die Transportfläche (26,31) des Förderbands (23,29) und die dem Förderband (23,29) zugewandte Seite der Behälter (1) wenigstens abschnittsweise wenigstens im Wesentlichen parallel zueinander, insbesondere vertikal, angeordnet werden,
- bei dem in einem mittleren Bereich der Behälterbahn (27,32) im Vergleich zum vorderen Bereich der Behälterbahn die Behälter (1) und das Förderband (23,29) gemeinsam seitlich zur Behälterbahn (27,32) und in dieselbe Richtung geneigt werden.

10. Verfahren nach Anspruch 9,
- bei dem im mittleren Bereich der Behälterbahn (27,32) die Transportfläche (26,31) des Förderbands (23,29) und die dem Förderband (23,269) zugewandte Seite der Behälter (1) wenigstens abschnittsweise wenigstens im Wesentlichen parallel zueinander, insbesondere horizontal, angeordnet werden und/oder
- bei dem im mittleren Bereich der Behälterbahn (32) die Transportfläche (31) des Förderbands (29) und die dem Förderband (29) zugewandte Seite der Behälter (1) wenigstens abschnittsweise wenigstens im Wesentlichen V-förmig zueinander angeordnet werden.

11. Verfahren nach einem der Ansprüche 1 bis 10,
- bei dem, insbesondere im mittleren Bereich der Behälterbahn (14,27,32), die Packstücke (5) über die der Transportfläche (11,26,31) des Förderbands (12,23,29) zugewandte Seite des Behälters (1) und/oder über den Kopf des Behälters (1) entladen werden und/oder
- bei dem sich die Transportfläche (11,26,31) des Förderbands (12,23,29) im mittleren Bereich der Behälterbahn (14,27,32) wenigstens abschnittsweise horizontal erstreckt.

12. Verfahren nach einem der Ansprüche 1 bis 11,
- bei dem, insbesondere im mittleren Bereich der Behälterbahn (14,27,32), die Behälter (1) wenigstens im Wesentlichen auf den Kopf gedreht werden und/oder
- bei dem, insbesondere im mittleren Bereich der Behälterbahn (14,27), die Behälter (1) relativ zur Transportfläche (11,26) des Förderbands (12,23) angehoben werden und/oder die Transportfläche (11,26) des Förderbands (12,23) relativ zu den Behältern (1) abgesenkt wird.

13. Verfahren nach einem der Ansprüche 1 bis 12,
bei dem die entladenen Behälter (1), insbesondere in einem hinteren Bereich der Behälterbahn (14,27,32), bedarfsweise in eine im Vergleich zum mittleren Bereich der Behälterbahn (14,27,32) entgegengesetzte Richtung, seitlich zur Behälterbahn (14,27,32) geneigt werden.

14. Verfahren nach Anspruch 13,
bei dem die entladenen Behälter (1), insbesondere in dem hinteren Bereich der Behälterbahn (14,27,32), wieder aufgerichtet werden und/oder bei dem die dem Förderband (12,23,29) zuvor zugewandten Seiten der Behälter (1) wenigstens im Wesentlichen vertikal angeordnet werden.

15. Verfahren nach einem der Ansprüche 9 bis 14,
- bei dem, insbesondere im vorderen Bereich der Behälterbahn (14,27,32), im mittleren Bereich der Behälterbahn (14,27,32) und/oder im hinteren Bereich der Behälterbahn (14,27,32), die Transportgeschwindigkeit der Behälter (1) entlang der Behälterbahn (14,27,32) wenigstens im Wesentlichen gleich, insbesondere wenigstens im Wesentlichen identisch, mit der Transportgeschwindigkeit (T) der Transportfläche (11,26,31) des Förderbands (12,23,29) gewählt wird und/oder
- bei dem, insbesondere im vorderen Bereich der Behälterbahn (14,27,32), im mittleren Bereich der Behälterbahn (14,27,32) und/oder im hinteren Bereich der Behälterbahn (14,27,32), die Transportgeschwindigkeit und/oder die Transportrichtung der Behälter (1) entlang der Behälterbahn (14,27,32) unterschiedlich zu der Transportgeschwindigkeit (T) der Transportfläche (11,26,31) des Förderbands (12,23,29) gewählt wird.
